# EUROPEAN PATENT SPECIFICATION

(11) **EP 2 653 062 B1**
(45) Date of publication and mention of the grant of the patent: **12.06.2019**
(21) Application number: 13164419.7
(22) Date of filing: 19.04.2013
(51) Int. Cl.: A01D 34/90, A45F 3/14

(54) **Shoulder harness for portable working machine**
Schultergeschirr für tragbare Arbeitsmaschine
Harnais de sécurité pour machine de travail portable

(30) Priority: 19.04.2012 JP 2012095770
(43) Date of publication of application: 23.10.2013
(73) Proprietor: Yamabiko Corporation, Ohme-shi Tokyo 198-8760 (JP)
(72) Inventor: Kamo, Keita, Tokyo, Tokyo 198-0021 (JP); Miyamoto, Masayoshi, Tokyo, Tokyo 193-0826 (JP); Tada, Osamu, Tokyo, Tokyo 198-0021 (JP); Chiba, Mitsutane, Tokyo, 198-0024 (JP)
(74) Representative: Schaumburg und Partner Patentanwälte mbB

(56) References cited:
- EP-A1- 1 661 446
- EP-A1- 2 243 347
- WO-A1-02/096238
- GB-A- 2 426 914
- US-B1- 6 247 624

## Description

### FIELD OF THE INVENTION

The present invention relates to a shoulder harness destined to support a portable working machine such as brush cutters, hedge trimmers, pruners or the like.

EP2243347 A1 discloses a harness comprising a backplate, a plurality of belts and an attachment wherein the attachment is supported by at least one of the backplate and the plurality of belts and is configured to be attached to the power equipment. EP 1661446 A1 discloses a suspender for a brush cutter that includes a hook member to be hooked on a retaining part and a stopper member to be inserted into the retaining part to keep the hook member hooked upon the retaining part, and wherein the stopper member is pushed down, an elastic piece attached to the hook member is pressed and elastically deforms and opens a hook part of the hook member.

### BACKGROUND OF THE INVENTION

Such a portable working machine is normally carried by an operator in operation with the machine, and its weight would be a considerable load to the operator's arms. To alleviate the load to the operator's arms, shoulder harnesses are used. These shoulder harnesses, in general, are configured to surround the chest of an operator, and composed of a harness network that includes at least a back-fitting member to be worn on the operator's back, and right and left shoulder belts connected to the back-fitting member.

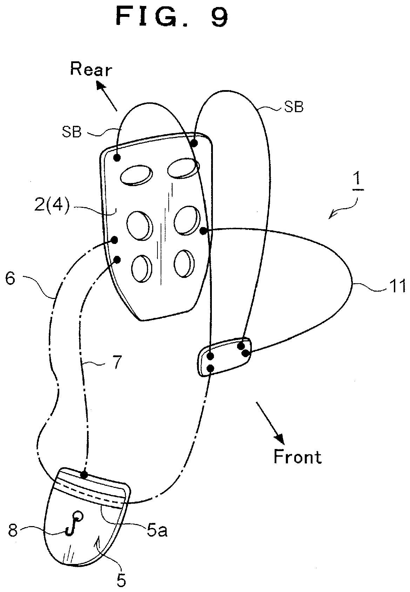

FIG. 9 schematically illustrates a shoulder harness disclosed in Patent Document 1, which is referred to as a first existing harness hereafter. The first existing shoulder harness 1 shown in FIG. 9 includes a side-fitting belt 11 connected to a back plate (back-fitting member) 2, and the side-fitting belt 11 joins at the front end thereof with distal ends of right and left shoulder belts SB in front of the operator, thereby forming a harness network 4. The side-fitting belt is a member that should fit one side of an operator's chest when the operator wears the shoulder harness. In connection with the harness network 4, a hook 8 as a hanging element is held on a hip pad 5. A working machine (not shown) can be removably held in engagement with the hook 8. More specifically, a laterally extending tunnel-like guide 5a is provided near the upper end of the hip pad 5. A suspension string 6 is inserted to pass through the tunnel-like guide hole or loop 5a is, and one end thereof is connected to the back-fitting member 2. The opposite end of the suspension string 6 is connected to the side-fitting belt 11. The hip pad 5 is also connected to the back-fitting member 2 via a suspension belt 7 that acts as a second suspension member.

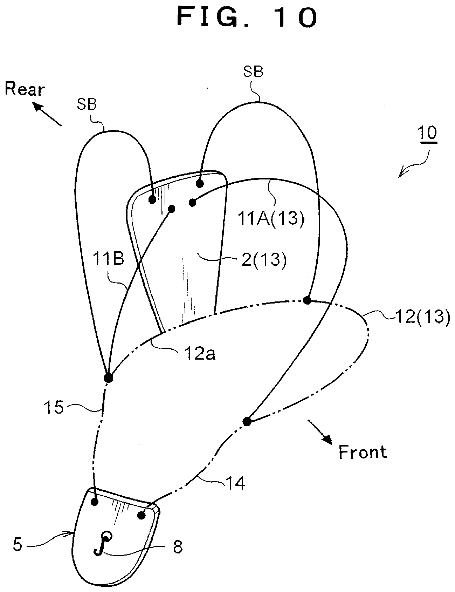

FIG. 10 schematically illustrates a shoulder harness disclosed in Patent Document 2, which is referred to as a second existing shoulder harness hereafter. The second existing shoulder harness 10 shown In FIG. 10 has a harness network 13 including a first diagonal belt 11A that is connected to an upper end portion of a back-fitting member 2 and extends therefrom diagonally. The first diagonal belt 11A extends from the upper end of the back-fitting member 2 diagonally downward along the left side of an operator's chest until reaching a front portion of the operator, and joins the waist belt 12 there. Thus, the first diagonal belt 11A substantially acts as a side-fitting belt. The waist belt 12 extends across the back-fitting member 2 to include an extension 12a that is a part beyond the back-fitting member 2 and extends along the right side of the operator's body. The extension 12a is connected at the right front end thereof to a second diagonal belt 11B that extends diagonally from the upper end of the back-fitting member 2. A hook 8 held on a hip pad 5 is connected to the harness network 13 via two suspension belts 14 and 15, front and rear. More specifically, the front suspension belt 14 is connected to the juncture of the first diagonal belt 11A and the waist belt 12, while the rear suspension belt 15 is connected to the juncture of the extension 12a of the waist belt 12 and the right one of the shoulder belts SB.

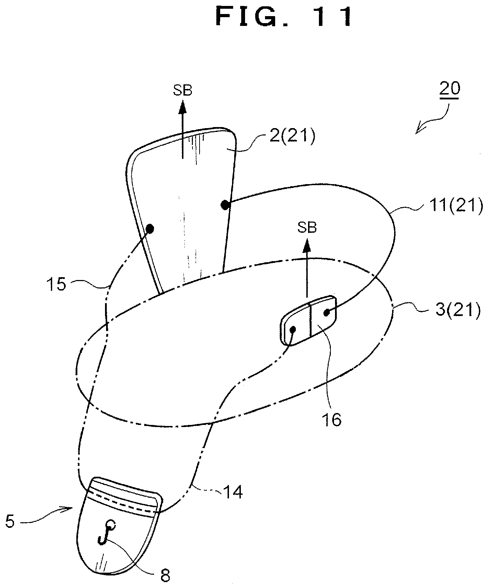

FIG. 11 schematically illustrates a shoulder harness disclosed in Patent Documents 3 and 4, which is referred to as a third existing shoulder harness hereafter. The third existing shoulder harness 20 shown in FIG. 11 includes a waist belt 3 and a side-fitting belt 11 connected to a back-fitting member 2 such that these three elements make a harness network 21. A hook 8 held on a hip pad 5 is connected to the harness network 21 via two suspension belts 14 and 15, front and rear. The front suspension belt 14 is connected to the front end of the side-fitting belt 11, while the rear suspension belt 15 is connected to the back-fitting member 2. As shown in FIG. 11, the shoulder harness 20 further includes a releasable joint buckle 16 that is to be positioned on the breast of an operator.

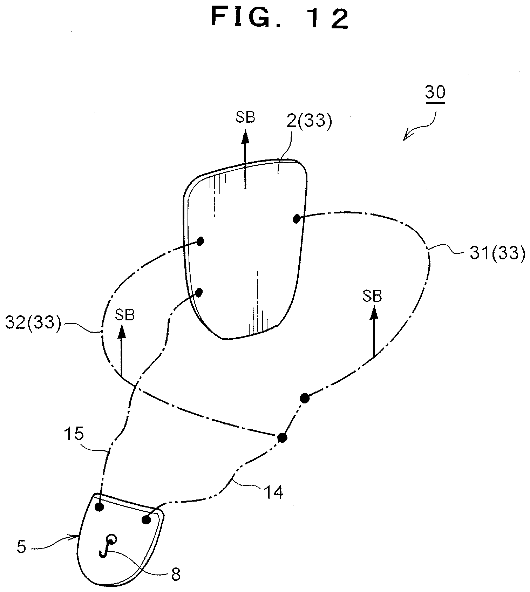

FIG. 12 schematically shows a shoulder harness disclosed in Patent Document 5, which is referred to as a fourth existing shoulder harness hereafter. The fourth existing shoulder harness 30 shown in FIG. 12 includes a back-fitting member 2 and two side-fitting belts 31 and 32, right and left, which are connected to the back-fitting member 2 such that these three elements make a harness network 33. A hip pad 5 having a hook 8 thereon is connected to the harness network 33 via two suspension belts 14 and 15, front and rear. The front suspension belt 14 is connected to the front end of the side-fitting belt 31, while the rear suspension belt 15 is connected to the back-fitting member 2.

Similar shoulder harnesses are disclosed in Documents EP 2 243 347 A1, EP 1 661 446 A1, GB 2 426 914 A, WO 02/096238 A1 and US 6 247 624 B1.

### LIST OF LITERATURES

[Patent Document 1]
   WO 2008/076010 A1
[Patent Document 2]
   US Patent No. 5,913,464
[Patent Document 3]
   US Patent No. 6,247,624
[Patent Document 4]
   WO 2008/147256 A1
[Patent Document 5]
   JP 2005-143453 A

### SUMMARY OF THE INVENTION

### Problems To Be Solved By The Invention

As will be seen from the foregoing explanation of some types of existing shoulder harnesses, they connect the hook as a hanging element (hip pad) to the harness network with a plurality of suspension belts or strings. When a working machine hung on the hook is swayed right and left, the hook can move accordingly following the displacement of the working machine. Therefore, the weight of the working machine can be dispersed over the entirety of the operator's chest, inviting no difficulties for the operation with the working machine. However, the existing shoulder harnesses involve the following problems caused by their structures where the hook (hip pad) is connected to the harness network via a plurality of suspension belts or strings.

When the above-mentioned sway or swing of the working machine is limited in a predetermined range, the hook (hip pad) can follow the movement with an appropriate degree of slack in the suspension belts or strings. However, once the movement of the working machine exceeds that range, the displacement of the hook following the movement of the working machine becomes excessive, and forcibly pulls one of the front and rear suspension belts or strings. It results in breaking the weight balance of the harness network and making a locally biased pulling force that locally acts on the operator's chest. Since the pulling force varies in magnitude and in bodily part applied with such a locally biased pulling force from time to time, it increases the fatigue of the operator who continues the intended operation while resisting the imbalanced stress.

It is therefore an object of the invention to provide shoulder harness that, while permitting movement of a hook with a working machine held thereon, alleviates localized, imbalanced application of a pulling force to a harness network by the movement of the hook.

### Means for Solution of the Problems

The object of the invention is achieved by a shoulder harness including a harness network composed of at least a back-fitting member to be worn on the back of an operator and right and left shoulder belts to be worn on right and left shoulders of the operator, such that a working machine can be retained on the hanging element, comprising:
an intermediary member interposed between the harness network and the hanging element to support the hanging element suspended therefrom,
both said intermediary member and said hanging element being located at one side of the operator's body, and said intermediary member being at a height above the hanging element.

Generally, the hook is fixed on a hip pad to be positioned at one side of the operator's hip, and it is suspended from a fulcrum on the intermediary member via the hip pad. According to the present invention, since the hook on which the working machine is to be hung is suspended on the intermediary member, it not only can sway relatively freely following displacement of the working machine but also can prevent generation of a localized pulling force in the harness network when the hanging element swings.

In a preferred embodiment of the invention, the front ends of the right and left shoulder belts join in front of the operator. Preferably, a releasable joint buckle is provided at the juncture of the front ends of the right and left shoulder belts.

In another preferred embodiment of the invention, a first holding member is provided to connect the intermediary member and back-fitting member. More preferably, a second holding member is provided to connect the intermediary member to the juncture of the front ends of the right and left shoulder belts.

In a still further preferred embodiment of the invention, the harness network includes a side-fitting belt extending laterally along one side of the operator's body opposite from the hook and connected to the back-fitting member.

In case the shoulder harness according to the present invention is used with a relatively heavy working machine, a waist belt is preferably connected to the lower end of the back-fitting member, and the intermediary member is preferably connected to the waist belt.

### BRIEF DESCRIPTION OF THE DRAWINGS

FIG. 1 illustrates a basic configuration proposed by the present invention.
FIG. 2 illustrates another basic configuration proposed by the present invention.
FIG. 3 explains an exemplary structure for shoulder harnesses according to the present invention.
FIG. 4 is a front view of a harness network included in a shoulder harness according to a first embodiment of the present invention.
FIG. 5 is a perspective view of an intermediary plate included in the shoulder harness according to the first embodiment of the present invention and a hip pad suspended on the intermediary plate.
FIG. 6 is a front view of a harness network included in a shoulder harness according to a second embodiment of the present invention.
FIG. 7 illustrates extensions (shoulder-fitting portions) formed as integral parts of a back plate included in the shoulder harness according to the second embodiment of the present invention.
FIG. 8 is a schematic front view explaining how an operator wears the shoulder harness according to the second embodiment of the present invention.
FIG. 9 schematically illustrates a first existing shoulder harness.
FIG. 10 schematically illustrates a second existing shoulder harness.
FIG. 11 schematically illustrates a third existing shoulder harness.
FIG. 12 schematically illustrates a fourth existing shoulder harness.

### DETAILED DESCRIPTION OF THE INVENTION

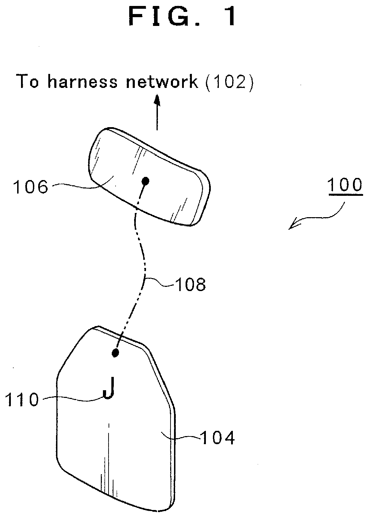

The present invention will be described in detail below by way of embodiments thereof with reference to the accompanying drawings FIGS. 1 to 8. These embodiments, however, should not be construed to limit the present invention. Through the description of the present invention, the terms "right" and "left" pertain to right and left sides respectively as viewed from an operator wearing the shoulder harness in its intended way, and the terms "front" and rear" pertain to front and rear sides respectively as viewed from the operator.

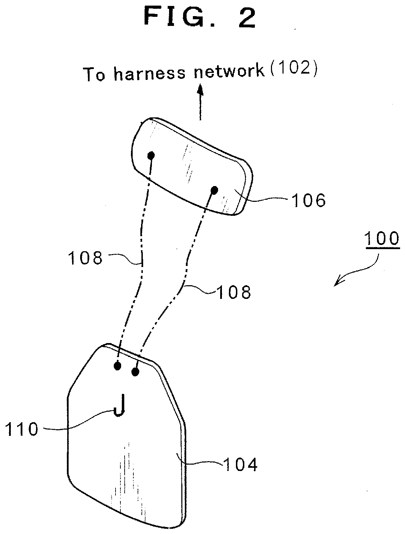

With reference to FIGS. 1 and 2, a shoulder harness 100 according to the present invention is explained first. The shoulder harness 100 includes a harness network 102, hook 110 (held on a hip pad 104), plate 106 as an intermediary member interposed between the harness network 102 and hook 110. The hook 110 held on the hip pad 104 is suspended on the intermediary plate 106 with the use of a suspension member 108 such as a wide belt, string or the like. A working machine is hung on the hook 110 as is conventionally done. Thus, the intermediary plate 106 is positioned at a higher position than the hip pad 104, and it is therefore closer to the harness network 102.

According to the present invention, the shoulder harness 100 may adopt one such suspension member 108 as shown in FIG. 1 or more than one (two) as in FIG. 2.

In the shoulder harness 100 according to the present invention, the intermediary plate 106 is interposed between the harness network 102 and the hook 110 as a hanging element (on the hip pad 104). With this intermediary plate 106, it is possible to prevent that the weight of the working machine hung on the hook 110 on the hip pad 104 concentrates on any particular portion of the harness network 102. In other words, undesirable concentration or localization of the load from the working machine onto any particular portion of the harness network 102 can be alleviated and evenly distributed by the intermediary plate 106. In addition, since the hip pad 104 can sway more freely than in a conventional structure as a pendulum along with movements of the working machine, it can degrade localization of impartment of the pulling force caused by swaying motion of the hook 110 onto particular portions of the harness network 102. Thus, the operator can be relieved from excessive fatigue.

In the shoulder harness according to the present invention, the intermediary plate 106 is interposed between the harness network 102 and the the hook 110, and the hook 110 on the hip pad 104 suspends from the intermediate plate 106. That is, the swing center of the hook 110 (and the hip pad 104) is the intermediary plate 106 instead of a fixed point on the harness network 102. Therefore, weight and movement of the working machine hung on the hook 110 is transmitted to the harness network 102 only via the intermediary plate 106. Thus, even though the working machine hung on the hook 110 is moved over a wide range and causes any force that might otherwise torsion the harness network 102 and could locally tighten it, such force is once received by the intermediary plate 106 and then applied to the harness network 102 with almost no torsion or deflection of force. Therefore, the harness network 102 may be designed without paying particular attention to requirements for reducing its possible torsion or local tightening by excessive wide movements of the working machine. The harness network 102 is sufficient to satisfy the requirement for allowing a certain moderate movement of the intermediary plate 100 relative thereto. Thus, a much freer design choice is available for the harness network 102 according to the invention.

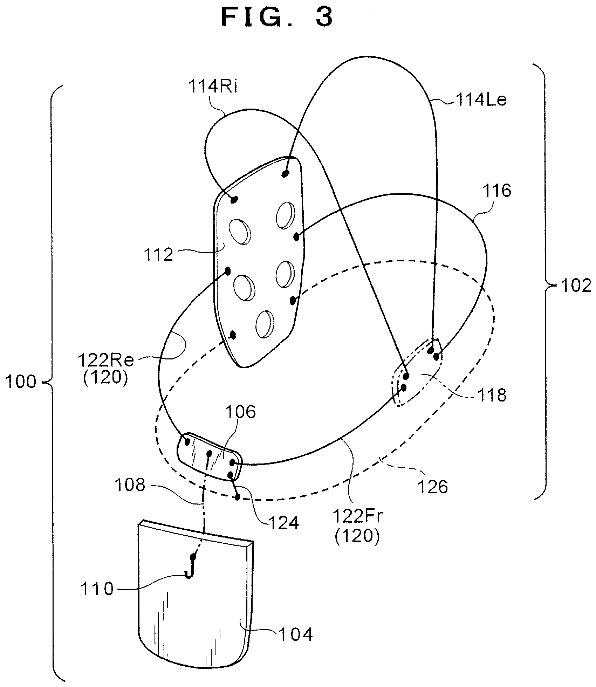

FIG. 3 shows an example of the harness network 102 that is preferred for carrying out the present invention. The harness network 102 shown in FIG. 3 preferably includes a back plate 112 that is a synthetic resin mold. The back plate 112 acts as the back-fitting member to be worn on the back of an operator. The harness network 102 further includes shoulder belts 114. In addition, the harness network 102 preferably includes a side-fitting belt 116 extending laterally to fit one side of an operator's upper body at a height of his/her chest (left side of the operator's chest in the illustrated example). The side-fitting belt 116 preferably joins front ends of the shoulder belts 114 (114Ri and 114Le) at the central part of the operator's breast. At the location for this joint, a joint buckle 118 or plate member is preferably provided to facilitate fixation and release of front end parts of the left and right shoulder belts and to enable connection of the side-fitting belt 116 to the joint buckle 118 or plate member. The opposite rear end of the side-fitting belt 116 is preferably connected to the back plate 112 as the back-fitting member.

Preferably, the intermediary plate 106 is connected to the harness network 102 including the side-fitting belt 116 via a holding member 120 such as a wide belt and/or a string. In the example shown in FIG. 3, the holding member 120 is composed of two front and rear divisional belts 122Fr and 122Re that are preferably adjustable in length.

These two divisional belts 122Fr and 122Re forming the holding member 120 are intended to span at a height a little lower than the side-fitting belt 116 along the opposite side (right side in the illustrated example) of the operator's body, which is opposite from the left side (in the illustrated example) of the operator's body on which the side-fitting belt 116 should fit. These belts 122Fr and 122Re are adjustable in length to be a little longer than the side-fitting belt 116.

As mentioned above, the shoulder harness 100 shown in FIG. 3 is so designed that when the working machine is subjected to a large movement, the intermediary plate 106 acts as a kind of substantial damper or adjuster of the harness network 102. Therefore, any load, even static or dynamic, applied to the intermediary plate 106 from the working machine (not shown) can be effectively dispersed over the entirety of the harness network 102, and it is prevented that the said load acts as a local pulling or twisting stress on the harness network 102. Further, the hook 110 (hip pad 104) suspended on the intermediary plate 106 is supported in a swingable mode on the intermediary plate 106 that is next to it and nearer than the harness network 102. Therefore, as far as the movement of the working machine is in a range where the intermediary plate 106 can keep its stable posture, a resulting movement of the hook 110 (hip pad 104) caused by the movement of the working machine will not exert direct influences to the harness network 102 itself. This means that any load generated by movements of the working machine is prevented from acting as a locally biased pulling force on the operator's chest each time upon movement of the working machine and that, even if any portion of such force yet reaches the harness network 102, the operator will not suffer changes of the applied load in location and/or magnitude from time to time.

In applications for heavier working machines, in general, a waist belt to be worn on an operator's waist is used either as an optional separate member of a shoulder harness or an integral part of a shoulder harness designed for such applications (see numeral 13 in FIG. 1 of Patent Document 1 and numeral 3 in FIG. 11 of the present application, which schematically shows the concepts of Patent Documents 3 and 4).

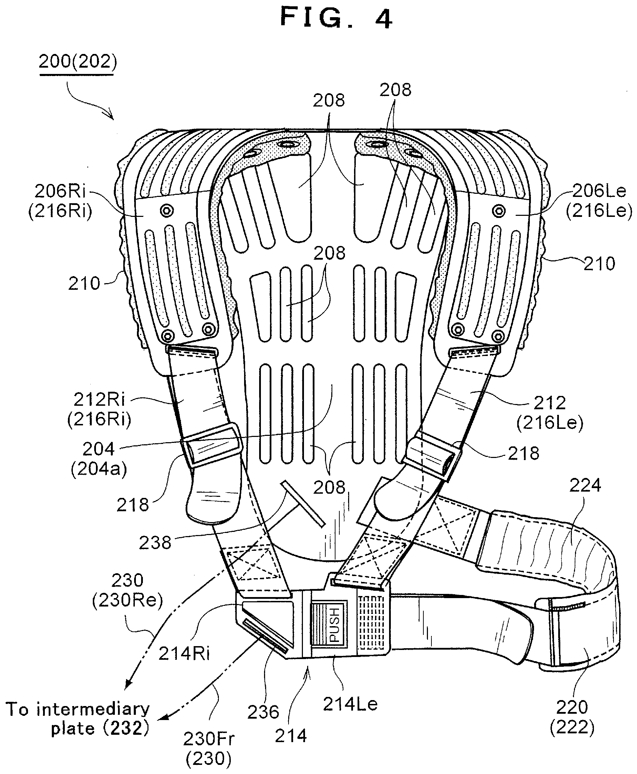

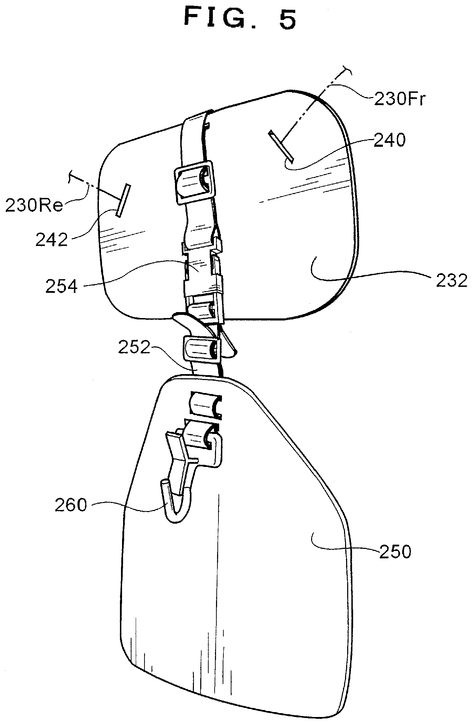

For using the harness network 102 shown in FIG. 3 with a relatively heavy working machine, a waist belt 126 shown in FIG. 3 by an imaginary line may be added. Like in an existing shoulder harness, the waist belt 126 is connected to the back plate 112 and worn on an operator's waist. As will be understood from FIG. 3, the waist belt 126 and the intermediary plate 106 are preferably connected to each other via a connecting member 124. In this case, a connecting portion of the holding member 120 for connection to the intermediary plate 106 is preferably isolated vertically from a connecting portion of the connecting member 124 for connection to the intermediary plate 106. The intermediary plate 106 can thus be positioned to more stably fit on the side of the operator's body. A first embodiment of the shoulder harness 100 shown in FIG. 3 will be explained below with reference to FIGS. 4 and 5.

### First Embodiment (FIGS. 4 and 5)

FIG. 4 shows a harness network 202 of a shoulder harness 200 according to the first embodiment of the present invention. As shown, the harness network 202 includes a synthetic resin-made back plate 204 as a back-fitting member to be worn on an operator's back. The back plate 204 has a body 204a and a pair of elongated right and left extensions 206Ri and 206Le integrally formed with the body 204a to extend forward from opposite side portions of the upper end of the body 204a. The pair of extensions 206Ri and 206Le is intended to fit on right and left shoulders of the operator. As shown, many aeration openings 208 are formed throughout the entire area of the back plate body 204a and right and left extensions 206Ri and 206Le. The back plate 204 having the right and left extensions 206Ri and 206Le may be prepared as an integral mold member of a synthetic resin such as PE, PP, nylon or the like. The right and left extensions 206Ri and 206Le constitute cores or bones of the shoulder-fitting portions of the right and left shoulder belts 216Ri and 216Le. The right and left extensions 206Ri and 206Le are lined with elongated shoulder cushions 210.

From front ends of the right and left extensions 206Ri and 206Le, known wide bands 212 of polyester fibers excellent in tensile strength extend in connection thereto, and these wide bands 212 preferably have joint buckles 214 at their free ends respectively. As a variant of the first embodiment, a plate member may be used in lieu of the joint buckle 214. The right resin-made extension 206Ri and right wide band 212Ri connected to the extension 206Ri make up a right shoulder belt 216Ri, while the left resin-made extension 206Le and left wide band 212Le connected to the extension 206Le make up a left shoulder belt 216Le. The joint buckles 214Le, 214Ri at front ends of the shoulder belts 216Le, 216Ri may be of a known type comprising two separate parts to be releasably mated with each other.

The right and left shoulder belts 216Le, 216Ri are provided at their bands 212Ri and 212Le with length-adjusting buckles 218 that enable the right and left shoulder belts 216Ri and 216Le to be adjusted in length independently.

The shoulder harness 200 according to the first embodiment may be provided with a side-fitting belt 220 extending laterally and intended to fit the left side of the operator's body. The side-fitting belt 220 is composed of a polyester fiber band 222 and a cushion member 224 stitched on the inner side of the band 222. The side-fitting belt 220 is connected at the rear end thereof to the back plate 204, and at the front end to the left joint buckle 214Le, to be adjustable in length.

In FIG. 4, an imaginary line 230 indicates a holding member with which the harness network 202 and a plate as an intermediary member 232 shown in FIG. 5 are connected to each other. The holding member 230 is composed of two separate parts, namely, front and rear holding belts 230Fr and 230Re each being a known wide band of polyester fibers. These rear holding belts 230Fr and 230Re are combined together at their opposed ends by the intermediary plate 232 (see FIG 5 as well). The other end of the front holding belt 230Fr is connected to the right joint buckle 214Ri, and the other end of the rear holding belt 230Re is connected to the back plate 204.

In FIG. 4, reference numeral 236 denotes a slit formed in the right joint buckle 214Ri. The front holding belt 230Fr is connected to the right joint buckle 214Ri at the slit 236. Reference numeral 238 in FIG. 4 indicates a slit formed in the back plate 204. The rear holding belt 230Re is connected to the back plate 204 at the slit 238. A length-adjusting buckle (not shown) is preferably interposed in each of the front and rear holding belts 230Fr and 230Re.

With reference to FIG. 5, the plate employed as the intermediary member 232 has formed in the upper portion thereof two front and rear slits 240 and 242 that are distant from each other in the front-to-rear direction. These slits 240, 242 are used to connect the front and rear holding belts 230Fr and 230Re to the intermediary member 232.

In FIG. 5, reference numeral 250 denotes a hip pad. The upper end portion of the hip pad 250 is connected to a widthwise intermediate portion of the intermediary plate 232 positioned above the hip pad 250 by a wide belt 252 that acts as a suspension member. The suspension belt 252 is made of a known wide band of polyester fibers, and preferably includes a length-adjusting buckle or joint buckle 254. As shown in FIG. 5, a known hook 260 is attached to the hip pad 250 to retain a working machine (not shown) hung thereon.

The shoulder harness 200 according to the first embodiment shown in FIGS. 4 and 5 is suitable for use with a relatively lightweight working machine. To use the shoulder harness 200 with a relatively heavy working machine, the back plate 204 may be extended downward and a waist belt (indicated with reference numeral 126 in FIG. 3), adjustable in length, may be connected to the lower end of the extension of the back plate 204. Like conventional ones, the waist belt is preferably composed of right and left two bands made of polyester fibers, and it preferably includes a joint buckle at a location to be opposed to the abdominal center of the operator, where the front ends of the right and left bands are positioned as well. The right band of the waist belt is preferably connected to the intermediary plate 232. As a means for connecting the right band of the waist belt to the intermediary plate 232, a tunnel or loop may be formed on the intermediary plate 232 such that the right band of the waist belt can be inserted in a horizontal orientation. Alternatively, the right band of the waist belt may be fixed onto the intermediary plate 232. As a way of fixing the waist belt to the intermediary plate 232, the intermediary plate may be fixed to a lengthwise intermediate portion of the right band when the right band is a single member. Alternatively, the right band may be composed of two divisional bands to connect the intermediary plate 232 between the two divisional bands. In this case, a rear one of the divisional bands is connected with its front end to the intermediary plate 232 whereas the other front one of the divisional bands is connected with its rear end to the intermediary plate 232.

This modified model of the shoulder harness is suitable for use with a relatively heavy working machine. In case this model is actually used with a relatively heavy working machine, the back plate 204 preferably has a higher rigidity. The right and left shoulder belts 216Ri and 216Le may be bands of synthetic fibers each extending continuously from the back plate 204 to the joint buckle 214. The shoulder harness of this type is described in detail in International Publication No. WO 2008/147256 A1. The entire disclosure of this publication is incorporated in this specification.

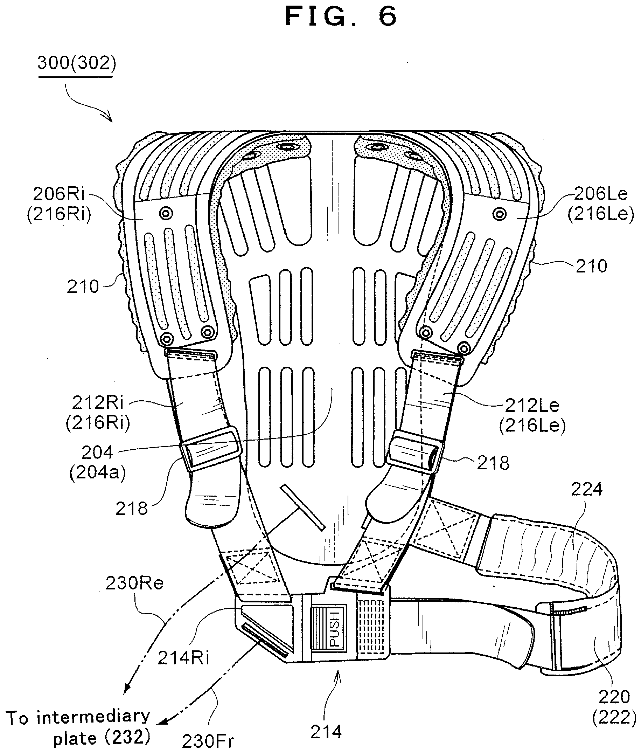

### Second Embodiment (FIGS. 6 to 8)

FIGS. 6 to 8 show q second embodiment of the present invention. The second embodiment is different from the aforementioned first embodiment in only one feature, and the remainder is common to the first embodiment. Therefore, by labeling the same reference numerals on these common components or elements, explanation of these common elements is omitted to avoid redundancy. Thus, the said feature of the second embodiment alone is explained below.

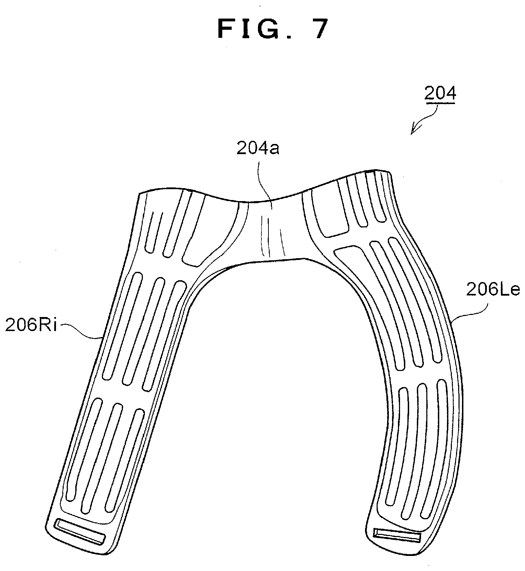

In FIG. 6, a shoulder harness according to the second embodiment is generally indicated with a reference numeral 300. The shoulder harness 300 includes a harness network 302 that is bilaterally asymmetric. More specifically, the right and left extensions 206Ri and 206Le extending continuously from the upper end of the body of the back plate 204 are not symmetric bilaterally. FIG. 7 is a fragmental plan view of the back plate 204 having right and left extensions 206Ri, 206Le made of synthetic resin as integral parts thereof. As best shown in FIG. 7, the left extension 206Le gradually curves to the right toward its distal (front) end whereas the right extension 206Ri extends straight like in existing shoulder harnesses.

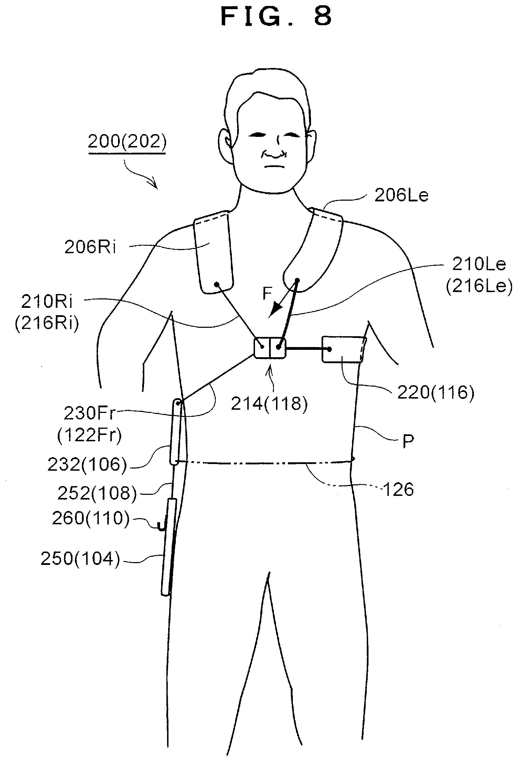

In other words, the distal end of the left extension 206Le included in the harness network 300 according to the second embodiment, which will fit on a front portion of an operator's shoulder when he/she wears the shoulder harness, is directed to the joint buckle 214. As a result, the left shoulder belt 216Le is given a strong tendency to extend toward the center of the operator's body as compared with the right shoulder belt 216Ri. FIG. 8 schematically illustrates this unique feature of the second embodiment. As seen from FIG. 8, it is most preferable to originally shape the front portion of the left extension 206Le to curve or extend diagonally such that its front end (distal end) is inherently pointed at the intermediary plate 106 or hook 260.

The weight of the working machine positioned at the right side of the operator's body imposes a larger load to the left shoulder belt 216Le than to the right shoulder belt 216Ri. When the working machine is moved largely, pulling force tends to act on the left shoulder belt 216Le. Nevertheless, in the arrangement where the extending direction of the shoulder-fitting portion (extension 206Le) inherently aligns with the direction of pulling force, such pulling force, even if acting on the left shoulder belt 216Le, does not invite changes in position and shape of the shoulder-fitting portion of the left shoulder belt 216Le. As a result, the shoulder-fitting portion of the left shoulder belt 216Le can keep fitting on the operator's shoulder even if a locally biased pulling force acts on the left shoulder belt 216Le. Furthermore, since the shoulder-fitting portion of the left shoulder belt 216Le does not suffer deformation such as torsion or twist even upon application of a locally biased pulling force on the left shoulder belt 216Le, the belt 216Le is relieved from degrading in durability.

In order to make the configuration of the shoulder-fitting portion of the left shoulder belt 216Le in which its front end at the joint buckle 214, intermediary plate 232 or hook (hook) 260 when the operator wears the shoulder harness, the extensions 206 extending from the back plate body 204a is originally formed to inherently exhibit the said shape as explained with reference to FIG. 7. That is, the right extension 206Ri extends straight like in existing shoulder harnesses, but the left extension 206Le curves or slants down towards the right.

In shoulder harnesses for use with relatively heavy working machines, it is usual that the back plate and the shoulder belts are separate members. The unique feature according to the second embodiment can be incorporated into shoulder harnesses of this type as well. In this case, a shoulder belt to be worn on the left shoulder of an operator may be originally given a shape that curves or slants at a portion that will fit on an area from the front shoulder to the breast of the operator when he/she wears the should harness.

The invention has been explained heretofore taking the shoulder harnesses 200, 300 in which the back plate 204 is a mold of synthetic resin. The base portion 204a of the back plate 204, which is the back-fitting member to be worn on the back of an operator, may be made by combining a plurality of wide, flexible bands in form of a latticework, for example.

### INDUSTRIAL APPLICABILITY

The present invention is suitable for use in all types of hand-held working machines that an operator can operate by hanging from around his/her waist or hip. These working machines include, for example, brush cutters, pole pruners (working machines having a cutting portion of a chainsaw type at one end of a long main pipe) and shaft hedge trimmers (hand-held working machines having a reciprocal cutter portion at one end of a long main pipe), among others.

## Claims

1. A shoulder harness including a harness network composed of at least a back-fitting member (112) to be worn on the back of an operator and right and left shoulder belts (114) to be worn on right and left shoulders of the operator, and including a hanging element connected to the harness network and composing a hook (110) fixed on a hip pad (104), such that a working machine can be retained on the hanging element,
wherein front ends of the right and left shoulder belts (114) join at a juncture in front of a central part of the operator,
**characterized by** a waist belt (126) detachably connected to the lower end of said back-fitting member (112) and worn on the operator's waist; and
an intermediary member (106) interposed between the harness network and the hanging element to support the hanging element suspended therefrom,
wherein said hanging element is suspended from said intermediary member (106) by a suspension member (108) such as a wide belt, string or the like; and both said intermediary member (106) and said hanging element are located at one side of the operator's body, wherein the waist belt (126) is connected to the intermediary member (106),
**characterised in that**
said intermediary member is at a height above the hanging element,
**in that** a first holding member (122Re) connects the intermediary member (106) and the back-fitting member (112),
and **in that** a second holding member (122Fr) connects the intermediary member (106) to the juncture of the front ends of the right and left shoulder belts (114),

2. The shoulder harness (100) according to Claim 1, further comprising a releasable joint buckle (118) provided at the juncture where the front ends of the right and left shoulder belts (114) join.

3. The shoulder harness (100) according to Claim 1 or 2, further comprising a side-fitting belt (116) that extends laterally along the other side of the operator's body that is opposite from said side where the hanging element is located, said side fitting member (116) being connected to the back-fitting member (112).

## Patentansprüche

1. Schultergeschirr, umfassend ein Geschirrnetzwerk, das zumindest aus einem Rückenpasselement (112), das auf dem Rücken eines Benutzers zu tragen ist, und einen rechten und einen linken Schultergurt (114), die auf der rechten und der linken Schulter des Benutzers zu tragen sind, zusammengesetzt ist, und umfassend ein Hängeelement, das mit dem Geschirrnetzwerk verbunden ist und einen Haken (110) bereitstellt, der an einer Hüftplatte (104) befestigt ist, sodass eine Arbeitsmaschine an dem Hängeelement gehalten werden kann,
wobei vordere Enden des rechten und des linken Schultergurts (114) an einem Verbindungspunkt vor einem zentralen Teil des Benutzers zusammenlaufen,
**gekennzeichnet durch** einen Taillengurt (126), der lösbar mit dem unteren Ende des Rückenpasselements (112) verbunden ist und auf der Taille des Benutzers getragen wird; und
ein Zwischenelement (106), das zwischen das Geschirrnetzwerk und das Hängeelement gesetzt ist, um das Hängeelement davon herabhängend zu halten,
wobei das Hängeelement von dem Zwischenelement (106) über ein Aufhängungselement (108), wie einen breiten Gurt, eine Schnur oder dergleichen herabhängt; und sowohl das Zwischenelement (106) als auch das Hängeelement an einer Seite des Körpers des Benutzers angeordnet sind,
wobei der Taillengurt (126) mit dem Zwischenelement (106) verbunden ist,
**dadurch gekennzeichnet, dass**
das Zwischenelement sich auf einer Höhe oberhalb des Hängeelements befindet,
ein erstes Halteelement (122Re) das Zwischenelement (106) und das Rückenpasselement (112) verbindet,
und dass ein zweites Halteelement (122Fr) das Zwischenelement (106) mit dem Verbindungspunkt der vorderen Enden des rechten und des linken Schultergurts (114) verbindet.

2. Schultergeschirr (100) nach Anspruch 1, ferner umfassend ein lösbares Verschlusselement (118), das an dem Verbindungspunkt vorgesehen ist, an dem die vorderen Enden des rechten und des linken Schultergurts (114) zusammenlaufen.

3. Schultergeschirr (100) nach Anspruch 1 oder 2, ferner umfassend einen Seitenpassgurt (116), der sich lateral längs der anderen Seite des Körpers des Benutzers erstreckt, die der Seite entgegengesetzt ist, an der das Hängeelement angeordnet ist, wobei das Seitenpasselement (116) mit dem Rückenpasselement (112) verbunden ist.

## Revendications

1. Baudrier de sécurité comportant un ensemble de sécurité constitué d'au moins un élément dorsal (112) qui doit se placer sur le dos d'un opérateur, et des sangles d'épaules droite et gauche (114) qui doivent être placées sur les épaules droite et gauche de l'opérateur, et comportant un élément d'accrochage relié à l'ensemble de sécurité et constitué d'un crochet (110) fixé sur un protège-hanche (104), de telle sorte qu'une machine de travail puisse être accrochée à l'élément d'accrochage,
dans lequel les extrémités avant des sangles d'épaules droite et gauche (114) se rejoignent au niveau d'une jonction sur le devant, au centre de l'opérateur,
**caractérisé par** une ceinture (126) reliée, de manière détachable, à l'extrémité inférieure dudit élément dorsal (112) et portée au niveau de la taille de l'opérateur ; et
un élément intermédiaire (106) intercalé entre l'ensemble de sécurité et l'élément d'accrochage afin de supporter l'élément d'accrochage qui y est suspendu,
dans lequel ledit l'élément d'accrochage est suspendu audit élément intermédiaire (106) grâce à un élément de suspension (108) tel qu'une ceinture ou une courroie large ou similaire ; et lesdits élément intermédiaire (106) et élément d'accrochage sont placés sur un côté du corps de l'opérateur,
dans lequel la ceinture (126) est reliée à l'élément intermédiaire (106),
**caractérisé en ce que**
ledit élément intermédiaire se trouve à une certaine hauteur au-dessus de l'élément d'accrochage,
**en ce qu'**un premier élément de retenue (122Re) relie l'élément intermédiaire (106) et l'élément dorsal (112),
et **en ce qu'**un second élément de retenue (122Fr) relie l'élément intermédiaire (106) à la jonction des extrémités avant des sangles d'épaules droite et gauche (114) .

2. Baudrier de sécurité (100) selon la revendication 1, comprenant en outre une boucle de fermeture détachable (118) fixée à la jonction des extrémités avant des sangles d'épaules droite et gauche (114).

3. Baudrier de sécurité (100) selon la revendication 1 ou 2, comprenant en outre une ceinture à fixer sur le côté (116) qui s'étend latéralement le long de l'autre côté du corps de l'opérateur qui est opposé au dit côté où se trouve l'élément d'accrochage, ledit élément de côté (116) étant relié à l'élément dorsal (112).
